(19) Europäisches Patentamt / European Patent Office / Office européen des brevets

(11) **EP 3 604 714 B1**

(12) **EUROPEAN PATENT SPECIFICATION**

(45) Date of publication and mention
of the grant of the patent:
**09.08.2023 Bulletin 2023/32**

(21) Application number: **18775588.9**

(22) Date of filing: **28.03.2018**

(51) International Patent Classification (IPC):
*E04H 9/04* (2006.01)      *E04B 2/42* (2006.01)
*F16F 7/116* (2006.01)      *E04H 9/10* (2006.01)

(52) Cooperative Patent Classification (CPC):
**E04H 9/10; E04B 2/42; E04H 9/04; F16F 7/116**

(86) International application number:
**PCT/ES2018/070267**

(87) International publication number:
**WO 2018/178479 (04.10.2018 Gazette 2018/40)**

(54) **ANTI-EXPLOSION PROTECTION**

EXPLOSIONSSCHUTZSYSTEM

SYSTÈME DE PROTECTION ANTI-EXPLOSIONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.03.2017 ES 201730533**

(43) Date of publication of application:
**05.02.2020 Bulletin 2020/06**

(73) Proprietor: **Fhecor Ingenieros Consultores, S.A.
28004 Madrid (ES)**

(72) Inventor: **PÉREZ CALDENTEY, Alejandro Rafael
28004 Madrid (ES)**

(74) Representative: **Polo Flores, Carlos
Carlos Polo & Asociados
C/ Profesor Waksman, 10
ES-28036 Madrid (ES)**

(56) References cited:
EP-A1- 0 009 654         WO-A1-98/30772
WO-A1-2009/085966         FR-A1- 2 831 146
GB-A- 2 077 802         US-A- 3 500 773
US-A- 4 718 356         US-B1- 6 298 607
US-B1- 6 298 607         US-B1- 7 174 692

## Description

The present disclosure relates to a system of blast loading protection by means of containment barriers. More particularly, the presently disclosed system allows energy to be absorbed by means of a damping system comprising two walls connected by oscillators, where a first wall receives the pressure wave and transmits a reduced pressure to the second wall by way of the movement of the mass of the first wall.

## BACKGROUND OF THE INVENTION

Safety barriers are a possible alternative to the provision of an adequate safety distance and are a clear solution when there is not enough space available (a situation that occurs systematically within large transportation centers). Moreover, if the barriers are properly implemented, they can ensure a high level of safety.

Barriers are mainly used to attenuate the pressure wave and stop high-velocity fragments that form as a consequence of an explosion and that which can come into contact with elements of the receiving system, for example elements which may require protection, such as people, equipment or secondary explosives.

However, due to their configuration, protective barriers are often only useful if they are located at a short distance from the explosion; generally, not more than ten times the height of the barrier. Whereas for longer distances, protective barriers generally do not give rise to adequate attenuation.

Barriers can have several forms: they can be covered or not, they can be cantilever walls or structures in the form of cubes in which one or more sides (and/or the roof) can be open or closed to prevent the entrance to the protected elements.

Additionally, protective barriers may also be subdivided into continuous and porous barriers.

For example, to mitigate the danger of coal dust explosions, coal deposits were kept damp. This procedure was substituted after the First World War by the mineral powder procedure, which, at first, was prescribed for coal veins with high volatility coals and then for all veins. These mineral powder barriers are intended to resist and limit the effects of explosions, which is also the object of the so-called water barriers that were introduced after the Second World War. In both mineral powder barriers and water trough barriers, a support frame is attached to the mine gallery shoring, on which the actual mineral powder barriers or individual water troughs are then placed. The explosion wave that strikes the barrier installation destroys the barrier, so that the applied mineral powder or water is distributed across the gallery and extinguishes the flame that follows the pressure wave.

The state-of-the-art rigid retaining devices consist of so-called splice consoles (housing elements) which are mounted on part of the shoring with hook screws. On the splice consoles, crossbeams are fixed in the longitudinal direction to the gallery axis. In the blocking systems of the crossbeams, beams are inserted and run transversally to the axis of the gallery and are kept together by means of blocking systems. The beams mounted in this way are then used to install or suspend water troughs. Explosion barriers of this type of construction are costly as a result of the large number of them which must be installed in an underground mine. The aim is, therefore, to provide an explosion barrier, having a less expensive construction type.

Other known protective structures such as bomb shelters consist of steel-reinforced concrete structures, usually mounted at ground level or below the ground, with special reinforced concrete walls having a large thickness. However, the disadvantage of conventional bomb shelters is that, because they are located at or below ground level, they are particularly susceptible to chemical attack, as the chemicals used normally used have a higher density than air and, therefore, accumulate in low locations near ground level. This problem was faced by the Israeli authorities during the Gulf War from 1990 to 1991, when it was necessary to warn the civilian population about how they could best shelter themselves in the event of a missile attack as the missiles were suspected of carrying chemical warheads.

It would, therefore, be desirable to construct the upper parts of buildings, e.g. apartments and offices, in such a way that they would be explosion-resistant. However, this is not practical, as reinforced concrete walls built to the thickness normally required would be excessively expensive.

Also known, are composite structures that include a grouping of hollow blocks with a plurality of intercommunicated holes filled with a mass of reinforced concrete. This type of construction using slag or concrete blocks are described in U.S. Patent No. 1 ,884,319 by Smith and No. 2,994.162 by Frantz. Smith describes the use of his structure to provide insulation against "heat, cold and humidity". Frantz states that his construction is simply easier to assemble than other block wall constructions. U.S. Patent No. 4,577,447 by Doran reveals a construction similar to those of the above patents but uses expanded polystyrene blocks.

The Spanish patent application P9402107 reveals a hollow block formed by a mixture of mineralized wood shavings and concrete with a density not exceeding, approximately, 1 t per cubic meter, for the construction of a wall of blocks and reinforced concrete to absorb the energy of an explosion. Within the hollow blocks, there are openings in orthogonal directions which allow the reinforced concrete to be placed therethrough. Because the hollow block is load-bearing, it cooperates with the reinforced concrete to resist explosion forces. Also disclosed is a procedure for building an explosion-resistant wall which includes the following steps: the grouping of a plurality of the hollow blocks described above to form a wall. The blocks have in their interior vertical and horizontal holes, and it is possible to place the blocks one on top of another and one alongside another so that the vertical and horizontal holes of the adjacent blocks are aligned. An integral grid of concrete and reinforcing steel is formed in the interconnected vertical and horizontal holes, obtaining a composite wall construction with the hollow blocks and reinforced concrete, thus forming the grouping of a plurality of hollow blocks and forming an integral grid which gives the composite wall construction the ability to substantially retain its structural integrity in the presence of explosion forces of sufficient magnitude to destroy a wall of blocks and reinforced concrete that does not use such hollow blocks.

Document EP 0009654 A1 describes an explosion-proof barrier in which two parallel walls are involved. Briefly, a chamber is defined between the two parallel walls, with a series of angular folds that act as shock-absorbing elements on the front wall, which can be displaced by the deformation of these elements, thus absorbing the energy received from the impact by plastic deformation. These types of structures are generally single-use, since once the internal structure has been deformed, the barrier does not return to its initial position, becoming useless or materially weakened against another subsequent impact.

A similar situation occurs in the case of the invention patent WO 9830772, relating to a construction panel in which two external and extreme walls are defined between which an internal nucleus is established based on a honeycomb of cells. The structure disclosed therein is susceptible to deformation in the event of an explosion to absorb its energy. As noted above, these types of structures are generally single-use in nature, since once the internal structure has been deformed, the panel becomes unusable or materially weakened for resisting another impact.

Document WO 2009085966 A1 also describes a structure designed to absorb the energy produced in explosions and similar, in which this structure is designed to work through flexure of vertical elements within the structure of the wall, not providing means of cushioning against impacts perpendicular to the wall, so its application is significantly different from the objective of this invention.

Document GB 2077802 discloses an anti-blast wall constituted by a structure based on metal sheets adopting a lattice-like configuration. Although it is well known that lattice-like structures have a high mechanical resistance, the issue presented by this type of structure is that they have very little elastic capacity, in such a way that once the withstandable maximum load is surpassed, they become plastically distorted, preventing them from returning to their original configuration.

Document US 7174692 discloses a window capable of withstanding pressures typical of car bomb blasts of 100 psi, and of resisting leaks of chemical or biological agents; the window structure incorporating a frame hermetically enclosing two facing glass panels defining an air chamber between the two, in such a way that each glass panel has a thin layer of polymer film on each surface thereof, and a pressure release valve in the frame to release the air pressure from within the space in response to the blast pressure exerted on an external surface of one of the panels. This is, therefore, a window-oriented system, for blasts of only 100 psi, which is not applicable to the practical field of application of the invention, wherein blasts of greater force are considered.

FR 2831146 discloses a wall for a chamber or container designed to resist blasts, for example from luggage, consisting of a grooved internal panel capable of being distorted for the absorbance of shocks, an intermediate panel located at a distance from the grooved panel, forming a cavity containing broken or spiral rods which cushion the movements of the chamber nucleus, a buffer panel and an external layer. Accordingly, in said structure, all the elements forming the same are destined to be elastically distorted when subjected to a blast, which is not applicable to the walls of a building, which must obviously be of a completely rigid nature.

U.S. Patent 6298607 describes a ventilated membrane to mitigate the effects of explosions, involving a highly complex structure, in which multiple inflatable and deformable chambers are defined, designed to cushion the effects of a possible explosion. As noted above, the structure involves a large number of flexible elements and intercommunicating chambers which must be watertight for proper operation, ultimately making the installation complex and consequently expensive.

US 6 298 607 discloses a highly complex anti-blast protection system, incorporating a series of ventilated membranes and inflatable, deformable chambers designed to mitigate the effects of a possible blast on a principal wall, combined with a frontal wall that can be displaced against one of these membranes, in conjunction with a series of elastic elements or springs. As stated above, this structure is highly complex, bulky and costly, which may entail considerable restrictions of space due to the great wall thickness presented by the assembly in its entirety, and requiring a perfect degree of airtightness of its different chambers for it to function correctly.

This further entails that the device is of a single-use nature, as, in the event of an explosion, the airtightness of the chambers will be jeopardised; to which it must be added that although the frontal wall of said structure can be displaced against the wall to be protected, the means of displacement foreseen do not enable said displacement to be guided perfectly parallel to the wall they protect, which might cause it to tilt and become jammed, not returning to its original position.

U.S. Patent US 3500773 describes a system for protection against the impact of projectiles involving a frontal and metallic wall designed to receive the impact in question. The wall is divided into sectors which are joined to a posterior wall that forms part of the structure to be protected, and where the union between both walls is made by means of elastic elements, such as springs. The elements limit the magnitude or distance which the metallic wall is able to be displaced with respect to the posterior wall.

These elements that limit the distance or margin of displacement of the metal wall are embodied in metal profiles that occupy a considerable volume within the chamber that is defined between the anterior metal wall and the posterior wall, such that the aforementioned barrier that constitutes this structure is designed to behave in two well-differentiated operational phases.

In an initial phase, the protection system has a merely elastic character, in which the metal plates participating in it move along complementary profiles against the elastic media until they come into contact with the profiles that function as stops associated with the concrete back wall.

Thus, in this first phase, there is a small displacement of the metal plate that is subjected to a small impact, being able to return to its initial position by the elastic effect of the recovery media contained inside it.

However, when it comes to more powerful impacts, the system behaves in a plastic way, that is to say, that the elements functioning as stops, arranged in the space defined between both walls, are deformed and flattened to allow the metal plates to move a greater distance, in such a way that, as in the other patents mentioned above, the structure is irreversibly damaged after the explosion.

Consequently, this system presents a problem in which the following aspects should be highlighted:

- Since it requires elements to function as stops between both walls, as well as to define a space or range of displacement with respect to this stop, the wall must have a large volume.
- Its plastic behaviour in the event of powerful explosions makes it single-use.
- The front wall, based on metal plates, is made of multiple independent plates, which complicates assembly.

Finally, U.S. Patent 4718356 can be mentioned, in which a system is disclosed to protect a wall against damage caused by explosions, in which the wall itself can be displaced by the expansion wave of the explosion through guides perpendicular to it with a means of braking that opposes this displacement.

Although this solution is effective against expansive waves, it does not plan for the impact of shrapnel or other objects which could damage the wall.

At the same time, once the impact has been absorbed, the wall will be blocked and displaced with respect to its initial position, which would require a complex and consequently costly "re-assembly" process, if possible, such that the wall could withstand a new impact should it occur.

The present disclosure is directed a barrier system against explosions based on elastic damping, in which much of the energy of the explosion is transformed into the kinetic energy of an oscillating mass, so that the system is not single-use, as described above, and can withstand multiple impacts without affecting its internal structure.

The proposed system proves to be very effective and is formed from elements that are easy to manufacture and install. It is of a type that enables adequate integration into architecture and can be combined with windows that allow visualization of the damping system. A clear application of this can be the protection of control rooms.

## DESCRIPTION OF THE FIGURE

To complement the description and in order to give a better understanding of the characteristics of the invention, in accordance with a preferred example of its practical embodiment, a figure which forms an integral part of the description and represents for the purposes of illustration is provided and without limitation the following:

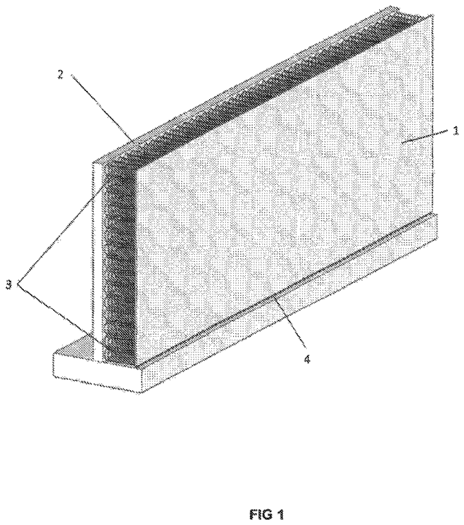

Figure 1. is a perspective view of the system representing the arrangement of the walls and oscillators with respect to the sliding surface.

## DESCRIPTION OF THE INVENTION

With reference to Figure 1, the system has two walls joined together by a plurality of oscillators having a degree of freedom $(m_i, k_i, c_i)$. The front wall has a certain mass (the greater the mass, the better), for which it is conceived as a metallic element, to receive the pressure wave of an explosion and transmit it to the reaction wall, which would be made of concrete, with a reduced pressure thanks to the setting in motion of the mass of the front wall

The front wall, which receives the shock wave, is supported by a system of wheels or bearings or rails, or supported on a sliding surface so that it can move independently of the rear wall.

Therefore, the system is based on dissipating part of the energy generated by the explosion through setting in motion an initially static mass (the front wall). The rear wall can be part of the barrier system or directly part of the structure to be protected.

The front wall can be made of steel which provides both high mass and adequate strength. The mass can be increased by adding metal boxes to the front wall to add soil, for example.

The system can be integrated into the architecture in multiple ways that can include all types of metal surface treatments. Likewise, the system can be enhanced from an architectural point of view, leaving the oscillators visible, either from a side or through "windows" in the metal panel. A system of this type can be effective for protecting a control room, for example, at a reasonable cost.

## PREFERRED EMBODIMENT OF THE INVENTION

The system according to claim 1 of the present invention comprises a barrier formed by a frontal wall 1 made of metal, which receives the pressure wave at the time of the explosion, where the said frontal wall 1 can be considered as a metallic element of a certain mass. The front wall 1, made of metal, is supported by a sliding surface 4 that enables its displacement and where this front wall 1 is in contact with a rear wall 2 preferably of concrete by means of a plurality of oscillators 3, of a single degree of freedom, which can be springs or similar. The barrier system works in such a way that at the time of the explosion, the front wall 1 receives a pressure wave that is transmitted to the rear wall 2 by means of the plurality of oscillators 3 interspersed between both walls due to the movement of the front wall 1, resulting in a reduced pressure on the rear wall 2, since only a part of the energy of the explosion is transformed into energy of deformation of the springs, the rest of the energy being dissipated in providing movement to the front wall.

The sliding surface 4 can be replaced by a system of roller bearings or a system of sliding rails.

To analyze the response of the oscillator system, the explosion can be treated as an impulse on the outer wall, i.e. the frontal wall 1 of metal. If the duration of the law of triangular pressures is short with respect to the period of the oscillators 3, as is the case, the impulse is equivalent to imposing an initial velocity on the plurality of oscillators 3 of a value equal to the value of the impulse divided by the mass. Under these conditions, assuming, in a simplified way and as an initial approximation, that the shock absorbers move synchronously, the equation of motion of the wall as a whole can be written as indicated in the following equation

$$x(t) = e^{-\xi \omega_n t} \frac{\dot{x}_0}{\omega_d} sin\omega_d t = e^{-\xi \omega_n t} \frac{iA_{wall}}{\omega_d \sum m_i} sin\omega_d t = e^{-\xi \omega_n t} \frac{\frac{1}{2} p_r t_{rf} A_{wall}}{\omega_d \sum m_i} sin\omega_d t$$

$$\omega_n = \sqrt{\frac{K}{M}}$$

$$\omega_d = \omega_n \sqrt{1 - \xi^2}$$

Where:

$\xi$     is the damping index;
$i$     is the impulse to the wall due to the explosion;
$p_r$     is the reflected pressure due to the explosion that is imposed on the barrier;
$t_{rf}$     is the duration of the equivalent triangular wave;
$A_{wall}$     is the area of the wall affected by the pressure of the explosion;
$\omega_n$     is the natural frequency of the system of 1gdl;
$\omega_d$     is the natural damped frequency of the system of 1gdl; and
$m_i$     mass of each of the harmonic oscillators $M = \sum m_i$.

The system can be appreciated in a simpler way by means of a numerical example.

**Example 1**

Assuming a detonation, an explosive equivalent to 20 kg TNT located 3.00 meters from the wall, the reflected pressure, $p_r$, would be 3952 kPa, and the duration of the equivalent triangular law of pressures, $t_{rf}$ would be 0.68 ms. Admitting that there are 4 steel springs per square metre of wall, that the springs have an average diameter of 25 cm (D), 20 mm bar diameter, d, and 9 coils (N), the stiffness of the 4 springs would be:

$$K = n_{springs}\frac{Gd^4}{8D^3N} = 4\frac{200 \times 10^6}{2(1+0.3)}\frac{0.02^4}{8 \times 0.25^3 \times 9} = 43.8\,kN/m^3$$

Regarding the mass of the system, it would be necessary to have the mass of the panel (MP) plus the mass of the 4 springs, so that per square meter, if it is assumed that the front panel is a steel plate of 40 mm thickness, the mass would be:

$$M = M_p + 4 \times M_{spring} = 7.85 \times \left(0.04 \times 1 \times 1 + 4 \times 9 \times \pi \times 0.25 \times \frac{\pi \times 0.02^2}{4}\right) =$$

$$= 7.85 \times (0.04 + 0.0088) = 0.384t/m^2$$

Therefore, the angular frequency of the system and the damped angular frequency (assuming damping, consistent with a metallic structure of 1%) would be:

$$\omega_n = \sqrt{\frac{K}{M}} = \sqrt{\frac{43.8}{0.384}} = 10.67\,rad/s \rightarrow T = \frac{2\pi}{\omega_n} = \frac{2\pi}{10.67} = 0.59s$$

$$\omega_d = \omega_n\sqrt{1-\xi^2} = 10.67\sqrt{1-0.01^2} = 10.67rad/s$$

By applying the expression of x(t), the displacement due to the explosion and the corresponding reaction in the concrete wall can be determined.

$$x(t = T/4) = e^{-\xi\omega_n\frac{T}{4}}\frac{\frac{1}{2}p_r t_{rf}A_{wall}}{\omega_d \sum m_i}sin\omega_d\frac{T}{4} = e^{-0.01\times10.67\times\frac{0.59}{4}}\frac{\frac{1}{2}3952 \times 0.68 \times 10^{-3} \times 1}{10.67 \times 0.384} \times 1.0$$

$$= 0.984 \times 0.328 = 0.32m$$

$$q_{wall} = 43.8 \times 0.32 = 14.02kPa$$

It is observed that a high load is obtained, but is compatible with the size of a conventional wall. For a wall height of 3.00 m, and assuming that the wall is simply supported and that the depth of the wall is 25 cm (a minimum value), the required reinforcement would correspond to a minimum amount, as can be seen in the following equation and it would not be necessary to have shear reinforcement:

$$M_{Ed} = 14.02 \times \frac{3^2}{8} = 15.77kNm/m \rightarrow A_s = \frac{M_{Ed}}{zf_{yd}} \approx \frac{15.77}{0.9 \times 0.2}\frac{1.0}{50} = 1.75cm^2/m$$

$$V_{Ed} = 14.02 \times \frac{3}{2} = \frac{21.03kN}{m} \rightarrow \tau = \frac{V_{Ed}}{bd} = \frac{21.03}{0.2} = 0.1MPa \rightarrow Does\ not\ require\ shear\ reinforcement$$

In order to evaluate what would be the difference compared to the unprotected wall, in the same case, one would have:

$$K_E = \frac{P_E}{\delta_{max}} = \frac{P_E}{\frac{5}{384}\frac{pL^4}{EI}} \qquad = \qquad \frac{K_L}{\frac{5}{384}\frac{L^3}{EI}} = \frac{384}{5}\frac{0.64\times3\times10^7\frac{1}{12}0.25^3}{3^3} = 71111kN/m^2$$

$$M_E = K_M M = 0.50 \times 0.25 \times 2.5 \times 3 = 0.94t/m$$

$$P_E = K_L pL$$

$$T = 2\pi\sqrt{\frac{M_E}{K_E}} = 2\pi\sqrt{\frac{0.94}{71111}} = 0.023s \rightarrow \frac{T}{t_{rf}} = \frac{0.023}{0.68 \times 10^{-3}} = 33.82 \rightarrow DFL = 0.142$$

$$\rightarrow q_{eq} = 0.142 \times 3952 = 561 kN/m^2$$

The above expressions are obtained by means of an equivalent static analysis, simulating the wall, which is treated as a doubly embedded beam, as a system of one degree of freedom.

It is observed that, without the protective barrier, the load acting on the wall is 40 times greater than for the scenario studied. It therefore follows that the proposed system is highly effective. In order to be able to support this level of load with a conventional solution, it would be necessary to have a wall of great thickness with buttresses, etc., giving rise to a very significant occupation of space.

The system is, therefore, a barrier having reversible dampening means, in which much of the energy of the explosion is transformed into the kinetic energy of an oscillating mass. From the example given above, it can be deduced that damping barriers are an effective and promising alternative, which are also made up of elements that are easy to manufacture and install. It is of a type that enables adequate integration into architecture and can be combined with windows that allow visualization of the damping system. A clear application of this can be the protection of control rooms.

**Claims**

1. A system for blast load protection using a damping barrier, said system comprising:

   a front wall (1) for receiving a pressure wave, the front wall (1) is operatively connected to a rear wall (2), the rear wall forming part of a structure to be protected; and
   a plurality of oscillatable elastic dampers which are of a single degree of freedom and which are connected to the front wall (1) and the rear wall (2) so that the moveable front wall (1) is an oscillatable mass relative to the rear wall; and a sliding surface (4) supports the front wall (1) and facilitates movement of the front wall (1) relative to the rear wall (2) when the pressure wave is received, wherein the front wall (1) is made of metal.

2. The system according to claim 1, wherein the elastic dampers are springs.

3. The system according to claim 4, wherein the springs are metallic.

4. The system according to claim 1, wherein the sliding surface (4) is a system of roller bearings.

5. The system according to claim 1, wherein the sliding surface (4) is a system of sliding rails.

**Patentansprüche**

1. System zum Schutz vor Explosionslasten unter Verwendung einer Dämpfungsbarriere, wobei das System Folgendes umfasst:

   eine Vorderwand (1) zum Aufnehmen einer Druckwelle, wobei die Vorderwand (1) mit einer Rückwand (2) wirkverbunden ist, wobei die Rückwand einen Teil einer zu schützenden Struktur bildet; und
   eine Vielzahl von schwingungsfähigen elastischen Dämpfern, die einen einzigen Freiheitsgrad aufweisen und die mit der Vorderwand (1) und der Rückwand (2) verbunden sind, sodass die bewegliche Vorderwand (1) eine schwingfähige Masse in Bezug auf die Rückwand ist; und eine Gleitfläche (4), die die Vorderwand (1) trägt und die Bewegung der Vorderwand (1) relativ zur Rückwand (2) ermöglicht, wenn die Druckwelle aufgenommen wird, wobei die Vorderwand (1) aus Metall hergestellt ist.

2. System nach Anspruch 1, wobei die elastischen Dämpfer Federn sind.

3. System nach Anspruch 4, wobei die Federn metallisch sind.

4. System nach Anspruch 1, wobei die Gleitfläche (4) ein System von Wälzlagern ist.

**5.** System nach Anspruch 1, wobei die Gleitfläche (4) ein System von Gleitschienen ist.

**Revendications**

1. Système pour la protection contre les charges explosives utilisant une barrière d'amortissement, ledit système comprenant :

   une paroi avant (1) destinée à recevoir une onde de pression, la paroi avant (1) étant reliée de manière opérationnelle à une paroi arrière (2), la paroi arrière faisant partie d'une structure à protéger ; et
   une pluralité d'amortisseurs élastiques oscillants qui sont d'un seul degré de liberté et qui sont reliés à la paroi avant (1) et à la paroi arrière (2) de sorte que la paroi avant mobile (1) est une masse osciliable par rapport à la paroi arrière ; et
   une surface de glissement (4) supporte la paroi avant (1) et facilite le mouvement de la paroi avant (1) par rapport à la paroi arrière (2) lorsque l'onde de pression est reçue dans laquelle la paroi avant (1) étant en métal.

2. Système selon la revendication 1, dans lequel les amortisseurs élastiques sont des ressorts.

3. Système selon la revendication 4, dans lequel les ressorts sont métalliques.

4. Système selon la revendication 1, dans lequel la surface de glissement (4) est un système de roulements à rouleaux.

5. Système selon la revendication 1, dans lequel la surface coulissante (4) est un système de rails coulissants.

FIG 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 1884319 A, Smith
- US 2994162 A, Frantz
- US 4577447 A, Doran
- ES P9402107
- EP 0009654 A1
- WO 9830772 A
- WO 2009085966 A1

- GB 2077802 A
- US 7174692 B
- FR 2831146
- US 6298607 B
- US 3500773 A
- US 4718356 A